# FASCICULE DE BREVET EUROPEEN

(11) **EP 1 491 713 B1**
(45) Date de publication et mention de la délivrance du brevet: **14.02.2007**
(21) Numéro de dépôt: 04370018.6
(22) Date de dépôt: 24.06.2004
(51) Int. Cl.: E06B 9/88, F16H 35/00, F16D 7/04

(54) **Engrenage à roue et vis sans fin tangente pour volet roulant**
Getriebe mit einer Schneckenwelle für Rolladen
Gearing with worm gear for roller shutter

(30) Priorité: 26.06.2003 FR 0307745
(43) Date de publication de la demande: 29.12.2004
(73) Titulaire: Bracq, Daniel, 59820 Gravelines (FR)
(72) Inventeur: Bracq, Daniel, 59820 Gravelines (FR)

(56) Documents cités:
- DE-A- 3 829 030
- US-A- 4 372 367

## Description

La présente invention concerne un carter compact comprenant un engrenage à roue et vis sans fin tangente, destiné à actionner un volet roulant.

Le document US-A-4372367 divulgue un carter conforme au préambule de la revendication 1.

On sait que la manoeuvre d'un volet roulant obtenue par un engrenage à commande manuelle qui entraîne positivement la rotation du tube d'enroulement dans les deux sens présente toujours le risque que, le volet étant abaissé et l'opérateur voulant procéder à l'ouverture, celui-ci fasse tourner le tube d'enroulement dans le mauvais sens et enroule le tablier à l'envers sur ce tube. La fin du déroulement du volet doit donc être marquée d'une façon qui empêche de poursuivre la rotation au delà. D'autre part, un type de mécanisme très couramment utilisé, compte tenu de son faible encombrement, consiste en un engrenage à roue et vis tangente dont la vis est actionnée par une tige reliée à une tringle oscillante pourvue d'une manivelle et la roue entraîne le tube d'enroulement avec une vitesse de rotation réduite par rapport à celle de la vis.

Dans les engrenages de ce type, conçus de façon classique, la façon d'empêcher l'erreur sur le sens de manoeuvre consiste à bloquer la roue qui entraîne le tube d'enroulement, et non la vis qui entraîne cette roue. On procède ainsi parce que les dispositifs de blocage ont une capacité de comptage des tours réduite mais, de ce fait, la butée de fin de course doit arrêter la rotation de l'élément de l'engrenage qui tourne le plus lentement et qui transmet le couple le plus élevé. Ceci est la cause fréquente d'un matage progressif de la butée ou d'une déformation du carter, car le signal d'arrêt n'est pas toujours nettement perçu par l'opérateur à qui il peut arriver de forcer la manoeuvre à contresens.
D'autre part, il est maintenant souvent demandé que les volets commandés manuellement le soient par un engrenage à transmission de mouvement irréversible qui les condamne en position fermée par le truchement d'attaches spéciales liant leur tablier au tube d'enroulement. Ces attaches sont rigides et s'arc-boutent en créant un blocage du tablier une fois celui-ci abaissé, ce qui empêche alors son soulèvement direct.
Pour cela une bonne coïncidence de l'action de la butée de fin de course avec une position adéquate des attaches est nécessaire. Or, l'action de la butée intervient sur une position angulaire du tube d'enroulement que l'on ne peut varier qu'en modifiant l'accouplement de l'embout de tube avec l'engrenage. Ce changement nécessite le démontage du tube et entraîne une grosse variation angulaire. Il faut donc que le tube soit monté avec une position d'approche convenable et que la liaison des attaches au tube d'enroulement soit réglable, au moins, sur une certaine plage de la périphérie du tube. De telles attaches rendent le montage du volet compliqué et elles sont onéreuses.
D'autre part, les attaches rigides dont la fixation au tube n'est pas réglable nécessitent d'être utilisées avec des engrenage sans fin de course, mais elles n'ont pas toujours la capacité d'assurer à elles seules la fonction de blocage de la manoeuvre car leur longueur varie par paliers successifs, ainsi que la hauteur des tabliers, et des conjugaisons défavorables de ces deux variables ne créent qu'un blocage imparfait, qui ne résiste généralement pas au couple élevé que peut transmettre l'engrenage.
L'invention résout ces difficultés pour le cas spécifique des engrenages à roue et vis sans fin tangente commandant un volet dépourvu de ressort d'équilibrage.
Selon l'invention, telle que définie par la revendication 1 annexée, la vis est traversée selon son axe par une tige qui commande sa rotation directement, et sa caractéristique principale tient en ce que cette vis, se déplace selon l'axe de la tige de commande lorsque celle-ci actionne la descente alors que la roue n'est plus entraînée par le tube d'enroulement à tourner dans ce sens, ou à la limite, est bloquée.
Un mode de réalisation particulier peut consister en ce que la vis soit entraînée directement par la tige de commande, et dans ce cas :
- le logement de la vis dans le carter présente deux compartiments communiquant entre eux, l'un, dans lequel la vis peut tourner librement tant qu'elle s'y tient, l'autre, fileté de telle sorte qu'il forme un écrou non débouchant pour la vis dans lequel celle-ci s'introduit en coulissant sur la tige de commande, lorsque cette tige tourne dans le sens de la descente alors que la roue n'est plus entraînée par le tube d'enroulement à tourner dans ce sens,
- lorsqu'elle tourne en agissant à la descente, la vis peut être retenue dans le compartiment cylindrique de son logement par un moyen de rétention qui lâche prise quand la roue se bloque et que le couple appliqué par la tige de commande à la vis se transforme en une force axiale suffisante,
- la vis peut présenter une encolure qui s'achève par un renflement, laquelle est prise entre les jambes d'un cavalier élastique que l'on peut ôter ou remettre sans avoir à démonter le carter, ce cavalier formant le moyen par lequel la vis est retenue de façon caduque dans le compartiment cylindrique de son logement,
- le frein qui contrecarre le couple statique du tablier en suspension peut ne pas agir sur la vis, mais le faire directement sur la tige de commande.

Un carter, qui n'est pas couvert par les revendications consiste en ce que, d'une part, le frein qui contrecarre le couple statique dû au tablier en suspension agit directement sur la tige de commande et non sur la vis, d'autre part, la vis coopère avec un canon accolé à elle par sa collerette pour former un cliquet à denture radiale, l'ensemble étant traversé par la tige de commande qui n'entraîne que le canon, ce dernier transmettant positivement à la vis la rotation de la tige lorsque celle-ci actionne la montée du tablier et s'écartant de la vis par saccades en coulissant sur la tige quand la tige actionne la descente alors que la roue résiste à tourner dans ce sens.

Enfin, quel que soit le mode de réalisation :
- le moyen de contrecarrer le couple statique généré par le tablier en suspension peut consister à insérer dans un orifice du carter par lequel passe la tige de commande un manchon à double collerette, les collerettes positionnées de part et d'autre de l'orifice, le manchon étant traversé par la tige et lié à elle en rotation, un anneau en matière élastique étant comprimé entre le corps du manchon et la paroi interne de l'orifice.
- le dispositif de freinage peut être un ressort de quelques spires qui est lié au carter par une de ses extrémités et qui entoure avec du serrage un cylindre métallique traversé par la tige de commande et entraîné par elle.

Les dessins annexés illustrent l'invention :
- La Fig.1 représente un engrenage dont la vis se bloque automatiquement, lorsque la descente du volet est achevée.
- La Fig. 2 représente une variante non couverte par les revendications annexées, selon laquelle au lieu de se bloquer, la vis se débraye automatiquement lorsque la descente du volet est achevée.

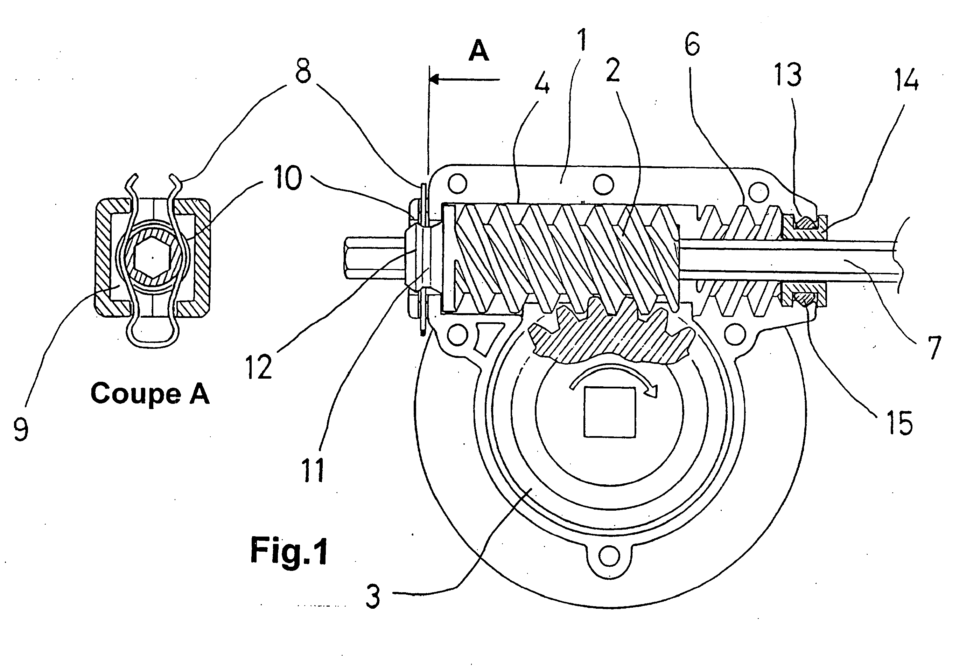

Avant d'expliquer les dessins, on fait ici état de certaines contraintes auxquelles sont soumis les engrenages à roue et vis sans fin, lorsqu'on les destine à la manoeuvre des volets roulants.
La disparition du couple sur la roue signifie que le volet a achevé sa descente uniquement si ce volet est dépourvu d'un ressort d'équilibrage. Au cours de cette descente, le rôle de l'engrenage consiste essentiellement à retenir le tablier, mais il faut aussi pouvoir maintenir celui-ci entrouvert et empêcher que son poids n'entraîne la rotation spontanée de l'organe de commande. Certaines convenances à respecter empêchent le plus souvent de rendre l'engrenage irréversible par lui-même : d'une part, il faut éviter d'avoir une réduction trop importante de la vitesse de la roue par rapport à celle de la vis, d'autre part, il faut réduire au maximum l'épaisseur de l'engrenage, enfin, pour une question de coût, on privilégie les roues et les vis en matière plastique qui peuvent être moulées. Ces trois impératifs obligent à utiliser des vis à filets multiples ayant un petit diamètre et un gros module de dents. L'angle de l'hélice qui en résulte est alors défavorable à l'irréversibilité. Néanmoins, du fait que la rusticité des mécanismes induit beaucoup de frottements, un angle d'hélice d'environ 20° et un freinage modéré de la vis suffisent à rendre l'engrenage irréversible car le couple renvoyé par la roue à la tige de commande est très inférieur au couple maximum généré par le tablier sur la roue.
On considère maintenant la Fig.1 représentant l'engrenage placé dans une moitié de son carter (1) démonté.

Les sens de rotation de la vis (2) sont liés de façon univoque aux sens de montée et descente du tablier, non représenté, mais le sens de la montée est indiqué par la flèche placée sur la roue (3). Le logement de la vis (2) dans le carter (1) comporte un compartiment cylindrique (4) dans lequel empiète le secteur denté de la roue (3) qui engrène avec le filetage de la vis (2). Les filets de la vis (2) prennent appui contre la paroi cylindrique du compartiment (4) dont la longueur excède légèrement celle de la partie filetée de la vis (2). La roue (3) tourne guidée par des épaulements (5) qui reposent dans des portées du carter (1). Le logement de la vis (2) se prolonge vers un autre compartiment (6) qui, lui, est fileté de telle sorte que la vis puisse s'y introduire partiellement lorsqu'elle est appelée à aller vers lui.
Telle qu'elle se situe sur le dessin, dans le compartiment cylindrique (4) de son logement, la vis (2) est en position de travail pour actionner la montée et elle a la possibilité de le faire indéfiniment. Elle stationne dans ce compartiment (4) pour autoriser la descente, tant que la roue (3) l'y retient du fait du couple généré par le poids du tablier. Ce couple, qui s'exerce dans le sens opposé à la flèche dont est marquée la roue (3), tend naturellement à repousser la vis (2) vers le fond du compartiment (4).
Quand le tablier a achevé sa descente, la roue (3) devient passive et la vis (2) est appelée à se déplacer du fait de l'inertie générale du mécanisme, ses filets la faisant progresser sur les dents de la roue (3) immobile, vers lé compartiment (6) de son logement opposé à celui qu'elle occupait. Au cours de ce déplacement, la vis (2) dont l'évidement central épouse la forme polygonale de la tige (7) tige de commande, coulisse sur cette tige (7) et lorsqu'elle a atteint le fond du compartiment fileté (6), elle se bloque et répercute cet effet sur la tige (7) de commande.

Par ailleurs, il y a intérêt à pouvoir adapter l'engrenage à différentes configurations de volets, car, comme on l'a dit, certains volets s'autocondamnent par le moyen d'attaches rigides liant leur tablier au tube d'enroulement, d'autres sont simplement accrochés par des sangles ou des lamelles métalliques souples. Les premiers nécessitent qu'après le déroulement du tablier le tube d'enroulement soit soumis à un certain couple orienté à la descente pour comprimer les attaches, pour les seconds ce couple est, au contraire, nuisible.
Une telle adaptation de l'engrenage s'obtient par un cavalier élastique (8) placé dans un réceptacle (9) du carter (1) pourvu de deux fentes opposées qui permettent au cavalier (8) d'y être introduit ou d'en être extrait, sans démonter le carter. La longueur de ce cavalier (8) dépasse celle du réceptacle (9), ses jambes sont arquées et il a. au repos, une forme appropriée pour se clipper dans son réceptacle.

Le cavalier (8) se positionne selon un plan perpendiculaire à l'axe de la vis (2), son réceptacle (9) traversant l'embouchure (10) vers l'extérieur du compartiment cylindrique (4) du logement de la vis (2). L'entrejambe du cavalier (8) est plus resserré que l'orifice de l'embouchure (10) face auquel il se positionne, cet orifice étant dédoublé par le réceptacle (9) qui le traverse. De son coté, la vis (2) se prolonge par une encolure (11) dont l'extrémité porte un renflement (12) pouvant juste passer dans le double orifice de l'embouchure (10). Lorsque la vis (2) est en position de travail pour actionner la montée, elle prend appui contre l'embouchure (10) du compartiment (4) et son encolure (11) traverse le réceptacle (9) du cavalier (8).
La coupe A montre l'intérieur du réceptacle et illustre ce qui vient d'être dit.

L'extraction du renflement de l'encolure à travers les jambes du cavalier nécessite une force axiale que la vis trouvera en tirant sur la roue quand celle-ci se sera bloquée. Ceci se traduira par un couple exercé sur la roue dans le sens de la descente. Cette retenue caduque de la vis dans son compartiment cylindrique comprimera de façon limitée les attaches rigides du tablier avant le blocage ultérieur de la manoeuvre.
L'adaptation de l'engrenage à un volet dont le tablier est accroché avec des attaches souples se réalise simplement en ôtant le cavalier de son réceptacle. Dans ce cas, la vis ne rencontrera pas d'opposition à son déplacement vers le compartiment fileté du carter, ce déplacement s'obtenant dès que la vis est appelée à devenir un élément actif d'entraînement alors qu'elle ne trouve pas d'appui pour le faire.

Le freinage empêchant la mise en rotation spontanée de la commande de l'engrenage sous l'effet du couple généré par le tablier suspendu peut être obtenu de la façon suivante. L'embouchure (13) vers l'extérieur du compartiment fileté (6) du carter (1) comporte un manchon (14) à double collerette, les collerettes se positionnant de part et d'autre de la dite embouchure (13). Un anneau (15) en matière élastique placé dans la gorge du manchon (14) s'intercale entre le corps de celui-ci et la paroi du carter (1) qui entoure l'orifice de l'embouchure (13). Le manchon (14) est traversé par la tige (7) de commande et il est entraîné dans sa rotation, son évidemment central épousant la section de cette tige (7). Compte tenu de la dureté du matériau de l'anneau, on s'arrange pour que l'espace qui lui est laissé entre la paroi de l'orifice et le corps du manchon induise un serrage tel qu'il absorbe le couple rétrograde maximum que peut transmettre la roue à la tige de commande. Si l'anneau est torique, on pourra aussi former dans la paroi de l'orifice une rainure en « V » qui permettra d'accroître la pression sur l'anneau.
On verra plus loin un autre mode de freinage de la vis qui peut aussi s'appliquer à cette première forme de réalisation de l'engrenage.

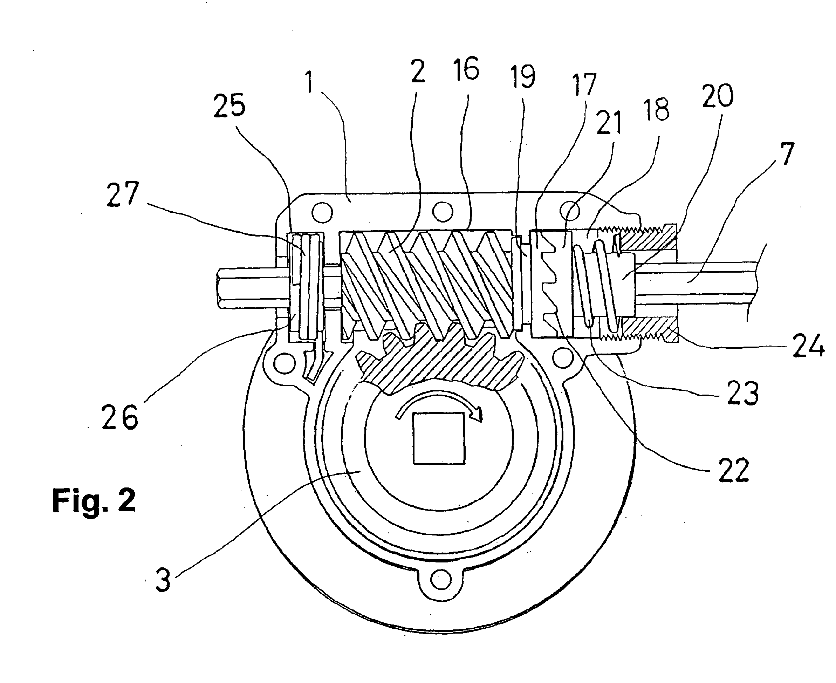

Dans la variante selon la fig. 2, un sens donné de rotation de l'engrenage détermine toujours un sens donné de déplacement du tablier, la flèche sur la roue (3) indiquant celui de la montée.

Dans cette variante, la partie filetée de la vis (2) est logée dans un compartiment (16) du carter (1) qui l'encadre strictement, de sorte qu'elle ne peut pas se déplacer tangentiellement à la roue (3). La vis (2) se prolonge avec une partie (17) non filetée dans un compartiment secondaire (18), voisin de son compartiment principal (16), une rainure (19) dans cette partie de la vis (2) recevant une nervure circulaire du carter marquant la séparation des compartiments (16, 18). La vis (2) et son prolongement (17) présentent un alésage traversant qui autorise le passage de la tige (7) de commande en lui gardant son indépendance rotative. La transmission de couple s'obtient par un canon (20) à collerette (21), placé dans le compartiment secondaire (18), la collerette (21) de ce canon (20) collaborant face à face avec le prolongement (17) de la vis (2) pour former un cliquet (22) à denture radiale. L'âme du canon (20) est un évidement dont la section épouse celle de la tige (7) de commande qui le traverse. Ce canon (20) est plaqué contre le bout denté de la vis (2) par un ressort (23).
Le sens de rotation de la tige (7) de commande selon lequel le canon (20) actionne positivement la vis (2) sera évidemment celui de la montée, et celui qui fait coulisser le canon (20) de façon répétitive sur la tige (7) de commande du fait du déboîtement du cliquet (22), celui de la descente.

On pourra adapter l'engrenage aux différents besoins des volets en jouant sur la pression exercée par le ressort sur le cliquet. Pour cela, un bouchon fileté (24) obture le compartiment (18) dans lequel sont logés le canon (20) et son ressort (23). Ce bouchon (24) comporte un évidemment central qui reçoit et guide le cylindre du canon (20). En vissant plus ou moins ce bouchon on comprime ou détend le ressort et le débrayage du cliquet s'obtient alors avec des niveaux de couple différents.
On pourra aussi varier les niveaux de couple en démontant le bouchon et en échangeant le ressort par un autre plus ou moins fort.

Considérons maintenant le moyen par lequel la manoeuvre est rendue irréversible dans cette forme de réalisation de l'engrenage.
A la différence de la première forme de réalisation, cette variante ne peut fonctionner que si le freinage est indépendant de la vis elle-même. En effet, celui-ci étant permanent et la charge du tablier variable selon son déroulement, il ne serait pas possible d'actionner la descente si la vis était freiné puisque, dès le départ, le cliquet se débrayerait et le tablier resterait enroulé. On prévoit donc un troisième compartiment (25) dans le carter (1), situé dans l'axe des deux précédents (16, 17), dans lequel on place un cylindre métallique (26) entouré d'un ressort (27) à fil carré, n'ayant que quelques spires jointives, que le cylindre (26) dilate radialement pour créer de la friction à la rotation. Ce même cylindre (26) est traversé selon son axe par la tige de commande (7) et une extrémité du ressort (27) est retenue par le carter (1), l'autre est libre et s'achève en restant tangente au cylindre (26). Un effet « cabestan » apparaît alors entre le ressort et le cylindre faisant que l'un des sens de rotation du cylindre est fortement freiné, l'autre très peu.
Le sens de rotation de la tige le plus freiné sera naturellement celui qui commande la descente, et donc, partant du point d'attache du ressort (27) au carter (1) le ressort (27) doit être enroulé sur le cylindre (26) en tournant autour de lui dans le même sens que tourne ce cylindre (26) lorsque l'engrenage agit à la descente.

Comme on l'a évoqué plus haut, ce mode de freinage peut aussi s'appliquer à la forme de réalisation telle que revendiquée. Il sera plus onéreux que celui initialement décrit, mais supérieur à lui techniquement étant donné qu'il n'agit pas à la montée alors que le premier mode agit quel que soit le sens du mouvement.

On résume, pour terminer, les propriétés d'un engrenage selon l'invention et leurs conséquences.
Cet engrenage marque automatiquement la fin de course en descente, lorsqu'apparaît l'un ou l'autre événement suivant : soit, la disparition du couple sur la roue, soit la naissance d'un couple contraire à celui généré par la suspension normale du tablier. Il possède un moyen d'adaptation rapide faisant que la fin de course se déclenche, suite à l'un ou l'autre événement choisi. On pourra donc l'associer à tout volet dont les attaches pourront être aussi bien souples que rigides.
Selon le mode de réalisation de l'engrenage, le marquage de fin de course en descente sera un blocage de la manoeuvre, le blocage s'obtenant sans effet multiplicateur d'effort pour les pièces ayant à l'assumer.
La pièce qui transmet le mouvement rotatif de la tige de commande se déplace selon l'axe de cette tige, après l'abaissement du tablier, sans rencontrer d'opposition immédiate à son déplacement.
Enfin, avec cet engrenage, on pourra utiliser des attaches rigides ordinaires qui empêcheront efficacement le soulèvement direct du tablier. En effet, la liaison de ces attaches au tube d'enroulement s'obtient le plus souvent par un vissage dans des perforations disposés selon une génératrice particulière du tube, ou sur des écrous coulissant dans une rainure. Comme c'est la compression des attaches qui entraîne le déclenchement de la fin de course, la position finale de cette génératrice est toujours optimale et il n'y a pas besoin de régler la fixation des attaches.

## Revendications

1. Carter (1) compact comprenant un engrenage destiné à actionner un volet roulant et fonctionnant selon le principe d'une roue dentée entraînée par une vis sans fin tangente, la roue (3) et la vis (2) étant logées dans le carter compact, le tube d'enroulement du volet étant reliable à la roue, la rotation de la vis étant commandable par une tige reliée à une manivelle, et lorsque que la vis (2) tourne en actionnant la descente du volet et que la roue (3) rencontre un empêchement à tourner dans ce sens, la vis (2) se déplace alors selon son axe, **caractérisé en ce que** la vis (2) se déplace vers un compartiment (6) du carter (1) dans lequel, lorsque la vis (2) en a atteint le fond, la rotation de celle-ci rencontre à son tour un blocage.

2. Carter selon revendication 1, dont la vis (2) est entraînée en rotation par une tige de commande traversante, **caractérisé en ce que** le logement de la vis (2) dans le carter (1) présente deux compartiments (4, 6) communicants, l'un (4), cylindrique, dans lequel, tant qu'elle s'y tient, la vis (2) peut tourner librement dans les deux sens, l'autre (6), fileté de telle sorte qu'il forme un écrou non débouchant dans lequel la vis (2) s'introduit en coulissant sur la tige (7) de commande, cela, lorsque la tige (7) actionne la descente et que la roue (3) rencontre un empêchement à tourner dans ce sens.

3. Carter selon revendication 2, **caractérisé en ce que**, lorsqu'elle tourne en agissant à la descente, la vis (2) est retenue dans le compartiment cylindrique (4) de son logement par un moyen qui lâche prise quand, la roue (3) étant bloquée, le couple appliqué à la vis (2) induit sur elle une force axiale suffisante.

4. Carter selon revendication 3, **caractérisé en ce que** la vis (2) présente une encolure (11) qui s'achève par un renflement (12), laquelle encolure (11) est engagée entre les deux jambes d'un cavalier (8) élastique que l'on peut ôter et remettre, sans avoir à démonter le carter (1), ce cavalier (8) formant le moyen par lequel la vis (2) est retenue de façon caduque dans le compartiment cylindrique (4) de son logement.

5. Carter selon revendication 1, **caractérisé en ce que** un dispositif de freinage (14, 15; 26,27) qui contrecarre le couple statique dû au poids du tablier suspendu est indépendant de la vis (2) et agit directement sur la tige de commande (7).

6. Carter selon revendication 5, **caractérisé en ce que** le dispositif de freinage consiste en un manchon (14) à double collerette et un anneau (15) en matière élastique, le manchon (14) étant inséré dans un orifice (13) du carter (1) par lequel passe la tige de commande (7) laquelle entraîne le manchon (14) en rotation, les collerettes du manchon (14) recouvrant latéralement l'orifice (13) du carter (1), l'anneau (15) étant, pour sa part, comprimé entre le corps du manchon (14) et la paroi interne de l'orifice (13).

7. Carter selon revendication 5, **caractérisé en ce que** le dispositif de freinage est un ressort (27) de quelques spires lié par une de ses extrémités au carter (1), lequel entoure avec du serrage un cylindre métallique (26), ce cylindre (26) étant traversé par la tige de commande (7) qui entraîne sa rotation.

## Claims

1. Compact casing (1) comprising a gear intended to actuate a roller shutter and operating along the principle of a cogged wheel driven by a tangent worm screw, the wheel (3) and the screw (2) being housed in the casing (1), the winding tube of the shutter being connectable to the wheel, the rotation of the screw being controllable by a rod linked to a handle and, when the screw (2)rotates on actuating lowering of the shutter and the wheel (3) encounters an obstacle preventing it from rotating in this direction, the screw (2) then moves along its axis, **characterized in that** said movement of the screw (2) is made towards a compartment (6) of the housing (1) in which, when the screw (2) has reached the bottom part thereof, its rotation in turn encounters a locking point.

2. Casing as in claim 1, whose screw (2) is driven in rotation by a controlling cross-rod, **characterized in that** the housing of the screw (2) in the casing (1) has two communicating compartments (4, 6), one (4) cylindrical in which for as long as the screw (2)remains therein it can freely rotate in both directions, the other (6) threaded so that it forms a blind nut in which the screw (2) inserts itself by sliding on control rod (7) at the time when the rod (7) actuates lowering and the wheel (3) encounters an obstacle preventing it from rotating in this direction.

3. Casing as in claim 2, **characterized in that** when the screw (2) rotates on actuating lowering it is retained in the cylindrical compartment (4) of its housing by a means which releases hold when, the wheel (3) being locked, the torque applied to the screw (2) induces sufficient axial force upon it.

4. Casing as in claim 3, **characterized in that** the screw (2) has a neck (11) which ends in an enlarged part (12) which neck (11) is engaged between the two branches of an elastic clip (8) which can be removed and put back without having to dismount the casing (1), this clip (8) forming the means by which the screw (2) can be held non-permanently within the cylindrical compartment (4) of its housing.

5. Casing as in claim 1, **characterized in that** a braking device (14,15 ; 26,27) which opposes the static torque due to the weight of the hanging shutter curtain is independent of the screw (2) and acts directly on the control rod (7).

6. Casing as in claim 5, **characterized in that** the braking device consists of a sleeve (14) with a double rim and a ring (15) in elastic material, the sleeve (14) being inserted in an opening (13) of the casing (1) through which the control rod (7) passes driving the sleeve (14) in rotation, the rims of the sleeve (14) laterally covering the opening (13) of the casing (1), the ring (15) for its part being compressed between the body of the sleeve (14) and the inner wall of the opening (13).

7. Casing as in claim 5, **characterized in that** the braking device is a spring (27) having a few turns connected at one of its ends to the casing (1), which tightly surrounds a metal cylinder (26), the control rod (7) passing through this cylinder (26) causing it to rotate.

## Patentansprüche

1. Kompaktes Gehäuse (1), ein Getriebe aufweisend, das dazu bestimmt ist, einen Rollladen anzutreiben und das nach dem Prinzip eines von einer tangierenden Schnecke angetriebenen Zahnrades funktioniert, wobei das Rad (3) und die Schnecke (2) in dem Gehäuse (1) untergebracht sind, wobei das Aufrollrohr des Rollladens mit den Rad verbindbar ist, wobei die Rotation der Schnecke von einem mit einer Kurbel verbundenem Stab steuerbar ist, und wenn die Schnecke (2) dreht und dabei das Herablassen des Rollladens antreibt und das Rad (3) auf ein Hindernis trifft, in diese Richtung zu drehen, sich die Schnecke (2) dann gemäß ihrer Achse verschiebt, **dadurch gekennzeichnet, dass** eine derartige Verschiebung der Schnecke (2) in Richtung eines Fachs (6) des Gehäuses (1) stattfindet, in welchem, wenn die Schnecke (2) den Boden davon erreicht hat, deren Rotation ebenfalls blockiert wird.

2. Gehäuse nach Anspruch 1, dessen Schnecke (2) von einem durchlaufenden Steuerstab angetrieben wird, **dadurch gekennzeichnet, dass** die Aufnahme der Schnecke (2) im Gehäuse (1) zwei kommunizierende Fächer (4 , 6) aufweist, ein zylindrisches Fach (4), in welchem die Schnecke (2), wenn sie dort ist, frei in die beiden Richtungen drehen kann, das andere Fach (6) ist derart mit einem Gewinde versehen, dass es eine nicht durchbrechende Mutter ausbildet, in welche die auf dem Steuerstab (7) gleitende Schnecke (2) eingreift, und zwar, wenn der Stab (7) das Herablassen bewirkt und das Rad (3) auf ein Hindernis, in diese Richtung zu drehen, trifft.

3. Gehäuse nach Anspruch 2, **dadurch gekennzeichnet**, wenn sie dreht und dabei das Herablassen bewirkt, die Schnecke (2) in dem zylindrischen Fach (4) ihrer Aufnahme von einem Mittel zurückgehalten wird, das loslässt, wenn bei blockiertem Rad (3) das auf die Schnecke (2) ausgeübte Moment auf diese eine ausreichende Axialkraft ausübt.

4. Gehäuse nach Anspruch 3, **dadurch gekennzeichnet, dass** die Schnecke (2) eine halsförmige Aussparung (11) aufweist, die in einer Verdickung (12) endet, wobei die Aussparung (11) zwischen den zwei Schenkeln eines elastischen Reiters (8) festgespannt ist, der lösbar und wieder aufsetzbar ist, ohne das Gehäuse (1) abbauen zu müssen, wobei dieser Reiter (8) das Mittel bildet, mit welchem die Schraube (2) lösbar in dem zylindrischen Fach (4) ihrer Aufnahme zurückgehalten wird.

5. Gehäuse nach Anspruch 1, **dadurch gekennzeichnet, dass** eine Bremsvorrichtung (14,15 ; 26,27), die dem statischen Moment, das dem Gewicht der aufgehängten Bahn geschuldet ist, entgegenwirkt, unabhängig von der Schnecke (2) ist und direkt auf den Steuerstab (7) wirkt.

6. Gehäuse nach Anspruch 5, **dadurch gekennzeichnet, dass** die Bremsvorrichtung aus einer Muffe (14) mit doppeltem Rand und einem Ring (15) aus einem elastischen Material besteht, wobei die Muffe (14) in einer Öffnung (13) des Gehäuses (1) eingesetzt ist, durch die der Steuerstab (7) läuft, der die Muffe (14) rotierend antreibt, wobei die Ränder der Muffe (14) seitlich die Öffnung (13) des Gehäuses (1) abdecken, wobei der Ring (15) seinerseits zwischen dem Körper der Muffe (14) und der Innenwand der Öffnung (13) zusammengedrückt wird.

7. Gehäuse nach Anspruch 5, **dadurch gekennzeichnet, dass** die Bremsvorrichtung eine Feder (27) mit einigen Windungen ist, die mit einem ihrer Enden mit dem Gehäuse (1) verbunden ist, die mit Spannung einen Metallzylinder (26) umgibt, wobei dieser Zylinder (26) von dem seine Rotation antreibenden Steuerstab (7) durchquert wird.
